# EUROPÄISCHE PATENTSCHRIFT

(11) **EP 1 834 101 B1**
(45) Veröffentlichungstag und Bekanntmachung des Hinweises auf die Patenterteilung: **25.03.2009**
(21) Anmeldenummer: 05819254.3
(22) Anmeldetag: 09.12.2005
(51) Int. Cl.: F16B 5/06, F16B 37/04

(54) **KLAMMER ZUM VERBINDEN EINES ANBAUKÖRPERS MIT EINEM GRUNDKÖRPER**
CLAMP FOR JOINING AN ADD-ON PIECE TO A BASE
PINCE SERVANT A RELIER UN CORPS AJOUTE ET UN CORPS DE BASE

(30) Priorität: 31.12.2004 DE 102004063686
(43) Veröffentlichungstag der Anmeldung: 19.09.2007
(73) Patentinhaber: A. RAYMOND ET CIE, 38000 Grenoble (FR)
(72) Erfinder: SPITZ, Uwe, 79618 Rheinfelden (DE)
(74) Vertreter: Rüttgers, Joachim
(86) Internationale Anmeldenummer: PCT/EP2005/013180
(87) Internationale Veröffentlichungsnummer: WO 2006/072337

(56) Entgegenhaltungen:
- DE-A1- 4 128 661
- US-A- 3 123 880
- US-A- 4 897 005

## Beschreibung

Die Erfindung betrifft eine Klammer zum Verbinden eines Anbaukörpers mit einem Grundkörper gemäß dem Oberbegriff des Patentanspruches 1.

Eine derartige Klammer ist aus US-A-3,123,880 bekannt. Die vorbekannte Klammer zum Verbinden eines Anbaukörpers mit einem Grundkörper verfügt über eine Basisplatte, die zwischen dem Grundkörper sowie dem Anbaukörper positionierbar ist und eine Basisplattenausnehmung zum Durchführen eines Befestigungsteiles aufweist. Weiterhin ist eine der Basisplatte gegenüberliegende und mit dieser über wenigstens einen Verbindungssteg verbundene Gegenplatte vorhanden, die eine Eingriffsanordnung in Gestalt einer Verprägung aufweist, die mit dem Befestigungsteil in Eingriff bringbar ist. Die vorbekannte Klammer verfügt weiterhin über wenigstens einen Andruckbügel, der mit einem gebogenen Übergangsabschnitt an der dem oder jedem Verbindungssteg gegenüberliegenden Seite an der Gegenplatte angesetzt ist und in einer auf den Grundkörper aufgeschobenen Anordnung der Klammer an der der Basisplatte gegenüberliegenden Seite an dem Grundkörper anliegt. Der oder jeder Andruckbügel weist an dem dem Übergangsabschnitt zugewandten Ende sowie an dem dem Übergangsabschnitt abgewandten Ende jeweils einen an dem Grundkörper anliegenden Anlagebereich auf. Zwischen den Anlagebereichen erstreckt sich ein in Richtung der Gegenplatte gewölbter Kuppelbereich, der bei Einfügen eines mit dem Grundkörper zu verbindenden Anbauteiles einer bestimmten Normdicke an der Gegenplatte anliegt und somit ein verhältnismäßig großes Anzugsmoment ermöglicht.

Aus US-A-4,897,005 ist eine über eine Basisplatte und über eine Gegenplatte verfügende Klammer bekannt. Die Basisplatte und die Gegenplatte sind über einen Verbindungssteg miteinander verbunden. An der Gegenplatte ist eine Eingriffsanordnung in Gestalt einer Schraubenmutter ausgebildet, die mit einem Befestigungsteil in Gestalt einer Gewindeschraube in Eingriff bringbar ist. An die Basisplatte ist ein Andruckbügel angeformt, der sich von dem dem Verbindungssteg gegenüberliegenden Ende der Basisplatte abgekantet mit einem Schrägabschnitt in Richtung der Gegenplatte erstreckt und mittels einer an die Dimensionen des Grundkörpers angepassten Stufenstruktur zum Eingriff mit einer in den Grundkörper eingebrachten Ausnehmung ausgebildet ist, an dem die Klammer vor Einschrauben der Befestigungsschraube gegen unbeabsichtigtes Abziehen somit vorfixiert ist.

Aus DE 41 28 661 A1 ist eine Klammer zum Verbinden eines Anbaukörpers mit einem Grundkörper bekannt, die über eine Basisplatte verfügt, die zwischen dem Grundkörper und dem Anbaukörper positionierbar ist und eine Basisplattenausnehmung zum Durchführen eines als Schnellbefestigungsschraube ausgebildeten Befestigungsteiles aufweist. Weiterhin ist eine der Basisplatte gegenüberliegende und mit dieser über wenigstens einen Verbindungssteg verbundene Gegenplatte vorhanden, die eine Eingriffsanordnung aufweist, die mit dem Befestigungsteil in Eingriff bringbar ist. In einer auf den Grundkörper aufgeschobenen Anordnung der Klammer liegen Andruckbügel in paralleler Anordnung der Basisplatte an der der Basisplatte gegenüberliegenden Seite an dem Grundkörper an, um die Klammer an dem Grundkörper zu halten. Zwar lassen sich mit dieser Klammer zufriedenstellende Verbindungsergebnisse erzielen, allerdings hat sich in der Praxis herausgestellt, dass bei Dickentoleranzen des Grundkörpers das Aufstecken und Entfernen der Klammer mit zunehmender Dicke sehr schwierig wird beziehungsweise dass bei abnehmender Dicke die Gefahr eines unbeabsichtigten Lösens von dem Grundkörper besteht.

Der Erfindung liegt die Aufgabe zugrunde, eine Klammer der eingangs genannten Art anzugeben, die auch bei unterschiedlich dicken Grundkörpern zuverlässig an dem jeweiligen Grundkörper gehalten sowie sehr einfach auf den Grundkörper aufsteckbar und von diesem wieder entfernbar ist.

Diese Aufgabe wird bei einer Klammer der eingangs genannten Art erfindungsgemäß mit den kennzeichnenden Merkmalen des Patentanspruches 1 gelöst.

Dadurch, dass sich bei der erfindungsgemäßen Klammer der oder jeder Andruckbügel von dem jeweiligen gebogenen Übergangsabschnitt mit einem Schrägabschnitt in Richtung der Basisplatte erstreckt und dass an jedem Andruckbügel an dem an dem Grundkörper anliegenden Ende ein in Richtung der Gegenplatte umgebogener Anlageabschnitt vorhanden ist, lassen sich mit verhältnismäßig hohen Klemmkräften auch in ihrer Dicke sehr unterschiedlich ausgebildete Grundkörper zwischen der Basisplatte sowie der Gegenplatte anordnen und auch wieder abziehen, da zum einen die erfindungsgemäße Klammer durch den oder jeden Schrägabschnitt Grundkörper mit sehr unterschiedlichen Dicken aufnehmen kann, wobei durch den oder jeden gebogenen Übergangsabschnitt eine verhältnismäßig hohe Federwirkung und damit Andruckkraft auf den Grundkörper ausgeübt wird, und zum anderen der oder jeder umgebogene Anlageabschnitt ein aufgrund der eingriffsfreien Verklemmung unproblematisches Entfernen gewährleistet.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Ansicht ein Ausführungsbeispiel einer erfindungsgemäßen Klammer,
- Fig. 2: die Klammer gemäß Fig. 1 in der Seitenansicht und
- Fig. 3: in einer Seitenansicht die Klammer gemäß Fig. 1 und Fig. 2 in einer Einbausituation.

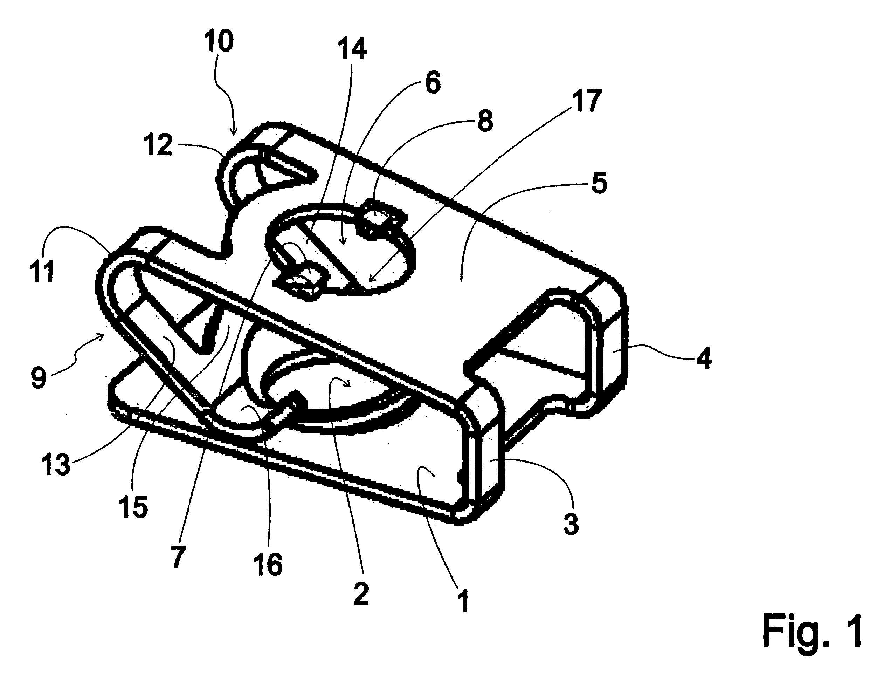

Fig. 1 zeigt in einer perspektivischen Ansicht ein Ausführungsbeispiel einer erfindungsgemäßen Klammer. Die vorzugsweise aus einem Metallblech hergestellte erfindungsgemäße Klammer verfügt über eine flache, im wesentlichen rechteckförmige Basisplatte 1, in die im Mittenbereich eine rundliche Basisplattenausnehmung 2 eingebracht ist. An einer Schmalseite der Basisplatte 1 sind außenseitig ein erster Verbindungssteg 3 und ein zweiter Verbindungssteg 4 einer Verbindungsanordnung angeformt, die sich im wesentlichen rechtwinklig von der Basisplatte 1 weg erstrecken.

An den von der Basisplatte 1 wegweisenden Enden der Verbindungsstege 3, 4 ist mit einer Schmalseite eine ebenfalls flache, in der Grundform rechteckartige Gegenplatte 5 angesetzt. Die Gegenplatte 5 weist eine Gegenplattenausnehmung 6 auf, die der Basisplattenausnehmung 2 gegenüberliegt und ebenfalls rundlich ausgebildet ist. Von dem Rand der Gegenplattenausnehmung 6 erstrecken sich radial nach innen eine erste Rastnase 7 und eine zweite Rastnase 8 einer Eingriffsanordnung, die diametral einander gegenüberliegend angeordnet sind.

An der den Verbindungsstegen 3, 4 gegenüberliegenden und über den von den Verbindungsstegen 3, 4 wegweisenden Rand der Basisplattenausnehmung 2 hinausragenden Schmalseite der Gegenplatte 5 sind ein erster Andruckbügel 9 und ein zweiter Andruckbügel 10 angeformt, der über einen ersten Übergangsabschnitt 11 beziehungsweise einen zweiten Übergangsabschnitt 12 verfügen. Die Übergangsabschnitte 11, 12 sind in Richtung der Basisplatte 1 umgebogenen, wobei an die von der Gegenplatte 5 wegweisenden Enden der Übergangsabschnitte 11, 12 ein erster Schrägabschnitt 13 beziehungsweise ein zweiter Schrägabschnitt 14 angesetzt sind, die sich winklig zu der Basisplatte 1 ausgerichtet in Richtung der Basisplattenausnehmung 2 erstrecken.

Die von den Übergangsabschnitten 11, 12 wegweisenden Enden der Schrägabschnitte 13, 14 sind bei dem dargestellten Ausführungsbeispiel zur gegenseitigen Kopplung der Andruckbügel 9, 10 über einen kreisbogenförmigen, in etwa der Außenkontur der Basisplattenausnehmung 2 folgenden Zwischensteg 15 miteinander verbunden. Weiterhin sind an den von den Übergangsabschnitten 11, 12 wegweisenden Enden der Schrägabschnitte 13, 14 ein erster Anlageabschnitt 16 und ein zweiter Anlageabschnitt 17 ausgebildet, die bei dem dargestellten Ausführungsbeispiel in Richtung der Gegenplatte 5 umgebogen sind und verhältnismäßig nahe der Basisplatte angeordnet sind beziehungsweise an der Basisplatte 1 anliegen.

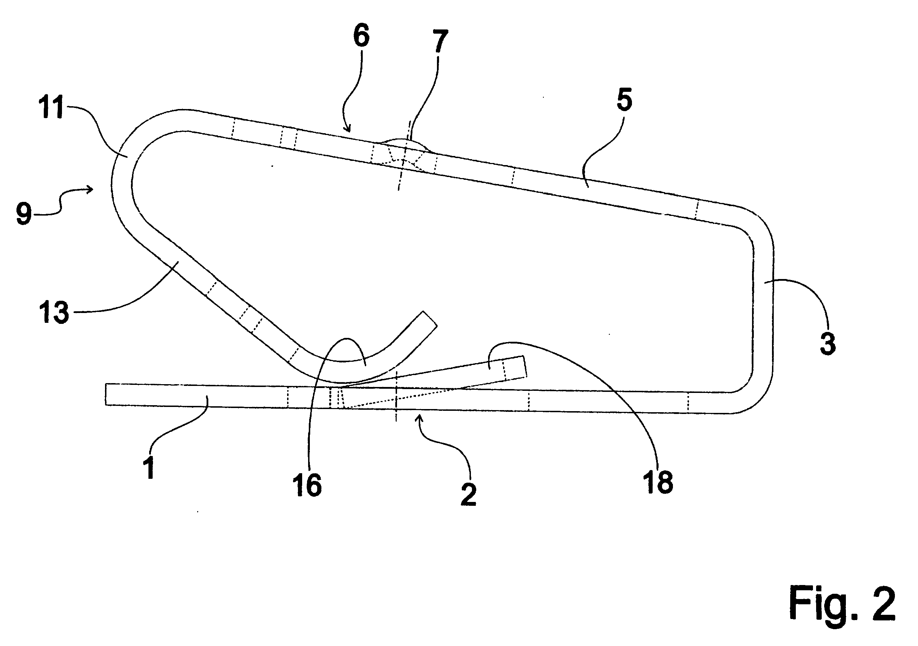

Fig. 2 zeigt die Klammer gemäß Fig. 1 in einer Seitenansicht, in der gut erkennbar ist, dass der Abstand zwischen der Basisplatte 1 und der Gegenplatte 5 in deren winkligen Ausrichtung zueinander in einer von den Verbindungsstegen 3, 4 wegweisenden Richtung zunimmt. Weiterhin lässt sich Fig. 2 entnehmen, dass im Bereich der Basisplattenausnehmung 2 eine Rastzunge 18 ausgebildet ist, die sich in Richtung der Verbindungsstege 3, 4 sowie in Richtung der Gegenplatte 5 erstreckt.

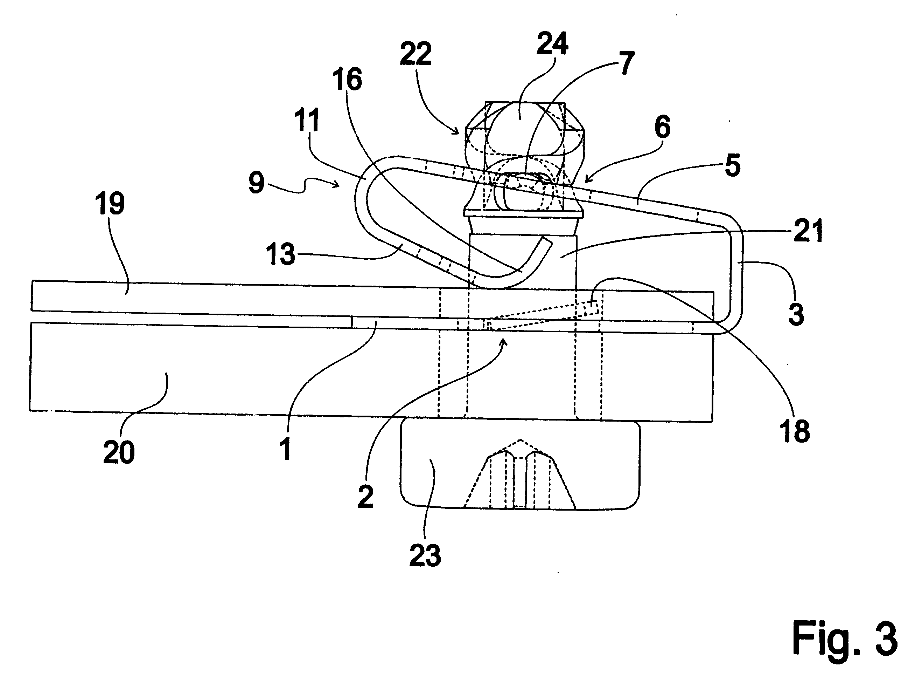

Fig. 3 zeigt in einer Seitenansicht das Ausführungsbeispiel gemäß Fig. 1 und Fig. 2 in einer Einbausituation mit einem Grundkörper 19 und einem mit dem Grundkörper 19 zu verbindenden Anbaukörper 20. Aus Fig. 3 ist ersichtlich, dass der Grundkörper 19 und der Anbaukörper 20 im Verbindungsbereich im wesentlichen parallel zueinander ausgerichteten flache Seiten aufweisen, zwischen denen die Basisplatte 1 eingefügt ist. Durch die Basisplattenausnehmung 2 tritt ein Schaft 21 einer als Befestigungselement dienenden Schnellbefestigungsschraube 22 durch, die sowohl durch den Grundkörper 19 als auch den Anbaukörper 20 durchgeführt ist und mit einem Schraubenkopf 23 an der der Basisplatte 1 gegenüberliegenden Seite des Anbaukörpers 20 anliegt sowie mit einem Kopfabschnitt 24 mit den Rastnasen 7, 8 in Eingriff kommt.

In der Einbausituation liegen die Andruckbügel 9, 10 unter Vorspannung an der der Basisplatte 1 gegenüberliegenden Seite des Grundkörpers 19 an und fixieren zusammen mit der Rastzunge 18 bereits vor dem Eingriff des Kopfabschnittes 24 der Schnellbefestigungsschraube 22 mit den Rastnasen 7, 8 die erfindungsgemäße Klammer an dem Grundkörper 19.

Aus Fig. 3 lässt sich gut erkennen, dass aufgrund des verhältnismäßig großzügig bemessenen Raumes zwischen der Basisplatte 1 und der Gegenplatte 5 die Dicke des Grundkörpers 19 innerhalb relativ großer Toleranzen so weit schwanken kann, dass die Rastnasen 7, 8 zuverlässig mit dem Kopfabschnitt 24 der Schnellbefestigungsschraube 22 in Eingriff kommen, und dass dabei die Handhabung der Klammer beim Aufstecken auf den Grundkörper 19 beziehungsweise beim Entfernen von dem Grundkörper 19 weiterhin sehr einfach ist. Zu der Dickentoleranz trägt weiterhin die Biegsamkeit der Verbindungsstege 3, 4 sowie der Übergangsabschnitte 11, 12 bei, deren Biegeeigenschaften zudem durch größere Breite für einen größeren Biegewiderstand beziehungsweise eine geringere Breite für einen geringeren Biegewiderstand fertigungstechnisch verhältnismäßig einfach einstellbar sind.

## Patentansprüche

1. Klammer zum Verbinden eines Anbaukörpers (20) mit einem Grundkörper (19) mit einer Basisplatte (1), die zwischen dem Grundkörper (19) und dem Anbaukörper (20) positionierbar ist und eine Basisplattenausnehmung (2) zum Durchführen eines Befestigungsteiles (22) aufweist, mit einer der Basisplatte (1) gegenüberliegenden und mit dieser über wenigstens einen Verbindungssteg (3, 4) verbundenen Gegenplatte (5), die eine Eingriffsanordnung (7, 8) aufweist, die mit dem Befestigungsteil (22) in Eingriff bringbar ist, und mit wenigstens einem Andruckbügel (9, 10), der in einer auf den Grundkörper (19) aufgeschobenen Anordnung der Klammer an der der Basisplatte (1) gegenüberliegenden Seite an dem Grundkörper (19) anliegt, wobei der oder jeder Andruckbügel (9, 10) mit einem gebogenen Übergangsabschnitt (11, 12) an der dem oder jedem Verbindungssteg (3, 4) gegenüberliegenden Seite der Gegenplatte (5) angesetzt ist, **dadurch gekennzeichnet, dass** sich der oder jeder Andruckbügel (9, 10) von dem jeweiligen Übergangsabschnitt (11, 12) mit einem winklig zu der Basisplatte (1) ausgerichteten Schrägabschnitt (13, 14) zu der Basisplatte (1) erstreckt und dass der oder jeder Andruckbügel (9, 10) an dem bei bestimmungsgemäßer Anordnung der Klammer an dem Grundkörper (19) anliegenden Ende einen in Richtung der Gegenplatte (5) umgebogenen Anlageabschnitt (16, 17) aufweist.

2. Klammer nach Anspruch 1, **dadurch gekennzeichnet, dass** zwei Andruckbügel (9, 10) vorhanden sind, die randseitig an der Gegenplatte (5) angeordnet sind und dass die von den Übergangsabschnitten (11, 12) wegweisenden Enden der Schrägabschnitte (13, 14) der Andruckbügel (9, 10) im Endbereich über einen Zwischensteg (15) miteinander verbunden sind.

## Claims

1. Clamp for joining an add-on body (20) to a base body (19), comprising a base plate (1) which can be positioned between the base body (19) and the add-on body (20) and has a base plate opening (2) for the passage of a fixing part (22), comprising a counter-plate (5) which is opposite the base plate (1) and connected to it via at least one connecting web (3, 4) and which has an engagement arrangement (7, 8) which can be made to engage the fixing part (22), and comprising at least one pressure bow (9, 10) which, in an arrangement in which the clamp is pushed onto the base body (19), rests on the base body (19) on the side opposite the base plate (1), the or each pressure bow (9, 10) being placed with a curved transition section (11, 12) on that side of the counter-plate (5) which is opposite the or each connecting web (3, 4), **characterized in that** the or each pressure bow (9, 10) extends, with an oblique section (13, 14) oriented at an angle to the base plate (1), from the respective transition section (11, 12) to the base plate (1), and **in that** the or each pressure bow (9, 10) has, at the end adjacent to the base body (19) when the clamp is arranged in the intended manner, a contact section (16, 17) bent over in the direction of the counter-plate (5).

2. Clamp according to Claim 1, **characterized in that** two pressure bows (9, 10) which are arranged on the edge of the counter-plate (5) are present, and **in that** those ends of the oblique sections (13, 14) of the pressure bows (9, 10) which point away from the transition sections (11, 12) are connected to one another in the end region via an intermediate web (15).

## Revendications

1. Agrafe servant à assembler un élément rapporté (20) avec un élément principal (19), comprenant une plaque de base (1) qui est destinée à être insérée en position entre l'élément principal (19) et l'élément rapporté (20), et présentant un évidement (2) ménagé dans la plaque de base pour le passage d'un organe de fixation (22), comprenant une contre-plaque (5) disposée à l'opposé de la plaque de base (1) et reliée à celle-ci par au-moins une barrette entretoise de liaison (3, 4), qui est munie d'un dispositif d'accrochage (7, 8) qui est destiné à être amené en prise d'encastrement avec l'organe de fixation (22), et comprenant au moins un étrier de pression (9, 10) qui, dans la position d'emmanchement de l'agrafe sur l'élément principal (19) est en contact d'application sur l'élément principal (19) au niveau de sa face opposée à la plaque de base (1), l'étrier ou chaque étrier de pression (9, 10) étant en l'occurrence réalisé attenant, par l'intermédiaire d'une portion de transition (11, 12), au côté de la contre-plaque (5) opposé à la ou à chaque barrette entretoise de liaison (3, 4), **caractérisée en ce que** l'étrier ou chaque étrier de pression (9, 10) s'étend, depuis sa portion de transition respective (11, 12), en direction de la plaque de base (1), par une portion à disposition oblique (13, 14) orientée en formant un angle vers la plaque de base (1), et **en ce que** l'étrier ou chaque étrier de pression (9, 10) comporte, au niveau de son extrémité qui, dans l'agencement de l'agrafe correspondant à sa destination est celle qui se trouve en contact d'application sur l'élément principal (19), une portion d'appui (16, 17) repliée en direction de la contre-plaque (5).

2. Agrafe selon la revendication 1, **caractérisée en ce qu'**il est prévu deux étriers de pression (9, 10) qui sont disposés en position de rive sur la plaque de base (5) et **en ce que** les extrémités, orientées vers l'extérieur par rapport aux portions de transition (11, 12), des portions à disposition oblique (13, 14) des étriers de pression (9, 10) sont reliées ensemble au niveau de leur zone d'extrémité par une barrette entretoise de liaison intermédiaire (15).
